# EUROPÄISCHE PATENTSCHRIFT

(11) **EP 4 179 222 B1**
(45) Veröffentlichungstag und Bekanntmachung des Hinweises auf die Patenterteilung: **01.05.2024**
(21) Anmeldenummer: 21742772.3
(22) Anmeldetag: 05.07.2021
(51) Int. Cl.: F16C 27/04, F16C 33/58, B62D 5/04, F16C 19/18, F16C 35/077, F16H 25/22, F16H 55/18, F16C 25/08

(54) **HILFSKRAFTLENKUNG FÜR EIN KRAFTFAHRZEUG**
POWER-ASSISTED STEERING FOR A MOTOR VEHICLE
DIRECTION ASSISTÉE POUR UN VÉHICULE À MOTEUR

(30) Priorität: 08.07.2020 DE 102020208584
(43) Veröffentlichungstag der Anmeldung: 17.05.2023
(73) Patentinhaber: thyssenkrupp Presta AG, 9492 Eschen (LI); thyssenkrupp AG, 45143 Essen (DE)
(72) Erfinder: ILLÉS, András, 9473 Gams (CH); SEIFRIED, Dennis, 9463 Oberriet (CH)
(74) Vertreter: thyssenkrupp Intellectual Property GmbH
(86) Internationale Anmeldenummer: PCT/EP2021/068492
(87) Internationale Veröffentlichungsnummer: WO 2022/008430

(56) Entgegenhaltungen:
- EP-A2- 1 920 993
- DE-A1-102016 007 541
- US-A1- 2012 024 618

## Beschreibung

### Stand der Technik

Die Erfindung betrifft eine Hilfskraftlenkung für ein Kraftfahrzeug, umfassend eine in eine Spindelmutter eingreifende, axial in Richtung einer Spindelachse erstreckte, in einem Gehäuse axial verlagerbare Gewindespindel, und eine Antriebseinheit mit einem drehfest mit der Spindelmutter verbundenen, um die Spindelachse drehend antreibbaren Getrieberad, welches in dem Gehäuse in einer Lageranordnung drehbar gelagert ist, die mindestens einen Lageraußenring aufweist, der stirnseitig über ein Federelement an dem Gehäuse axial abgestützt ist und der koaxial in einem Hülsenelement aufgenommen und radial in dem Gehäuse gehalten ist.

Bei einer Hilfskraftlenkung wird zusätzlich zu einem manuell über das Lenkrad in die Lenkwelle eingebrachten Lenkbefehl eine Hilfskraft durch einen elektromotorischen Hilfskraftantrieb erzeugt und zur Unterstützung der Lenkbewegung der gelenkten Räder in den Lenkstrang eingekoppelt.

Bei einer Zahnstangelenkung ist an der Lenkwelle ein Lenkritzel angebracht, welches in einem Lenkgetriebe mit einer Zahnstange in Eingriff ist, die einem Gehäuse linear verschieblich gelagert ist und an die Spurstangen der gelenkten Räder angeschlossen ist, so dass eine manuelle Drehung der Lenkwelle eine Verschiebung der Zahnstange bewirkt, und dadurch einen Lenkeinschlag erzeugt.

Zur Einkopplung einer Hilfskraft in eine Zahnstangenlenkung ist es beispielsweise aus der DE 10 2013 006 432 A1 bekannt, einen motorisch antreibbaren Spindeltrieb vorzusehen, mit dem eine lineare Hilfskraft auf die Zahnstange aufgebracht werden kann. Die Gewindespindel des Spindeltriebs, deren Spindelachse sich axial in der Verschieberichtung erstreckt, ist mit der Zahnstange fest verbunden, und greift in eine Spindelmutter ein, die in dem Gehäuse axial abgestützt drehbar gelagert ist. Über ein Getrieberad, welches koaxial mit der Spindelmutter drehfest verbunden ist, beispielsweise in Form einer außen an der Spindelmutter umlaufenden Verzahnung, kann die Spindelmutter mittels eines Elektromotors drehend angetrieben werden, um die Gewindespindel zusammen mit der Zahnstange in dem Gehäuse linear in axialer Richtung zu bewegen.

Der Spindeltrieb kann bevorzugt als Kugelgewindetrieb (KGT) ausgebildet sein, bei dem zwischen der als Kugelmutter ausgebildeten Spindelmutter und dem Gewinde der Gewindespindel Kugeln abrollend umlaufen können. Das mit der Kugelmutter verbundene Getrieberad ist in einer Lageranordnung gelagert, die einen an dem Gehäuse abgestützten Lageraußenring aufweist, beispielsweise den Außenring eines Wälzlagers, dessen Innenring an dem Getrieberad angeordnet ist. Um Verspannungen im Kugelgewindetrieb zu vermeiden, ist es im Stand der Technik bekannt, den Lageraußenring elastisch über ein außen stirnseitig angebrachtes, axiales Federelement mit dem Gehäuse zu verspannen, so dass Verkippungen aufgrund von dynamischen Belastungen im Betrieb ausgeglichen werden können. Um derartige Ausgleichbewegungen von bauteil- und temperaturbedingten Toleranzen zu ermöglichen ist es weiterhin bekannt, zwischen dem Lageraußenring und dem Gehäuse ein Hülsenelement anzubringen.

Die Kombination eines Federelements und eines Hülsenelements hat den Vorteil einer hohen Laufruhe und eines verringerten Verschleißes. Nachteilig kann jedoch die aufwendige Fertigung und Montage sein.

Eine Hilfskraftlenkung der eingangs genannten Art ist aus der DE 10 2016 007541 A1 bekannt.

Angesichts der vorangehend erläuterten Problematik ist es eine Aufgabe der vorliegenden Erfindung, den Fertigungs- und Montageaufwand zu verringern.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Hilfskraftlenkung für ein Kraftfahrzeug, umfassend eine in eine Spindelmutter eingreifende, axial in Richtung einer Spindelachse erstreckte, in einem Gehäuse axial verlagerbare Gewindespindel, und eine Antriebseinheit mit einem drehfest mit der Spindelmutter verbundenen, um die Spindelachse drehend antreibbaren Getrieberad, welches in dem Gehäuse in einer Lageranordnung drehbar gelagert ist, die mindestens einen Lageraußenring aufweist, der stirnseitig über ein Federelement an dem Gehäuse axial abgestützt ist und der koaxial in einem Hülsenelement aufgenommen und radial in dem Gehäuse gehalten ist, ist erfindungsgemäß vorgesehen, dass das Federelement als Federabschnitt und das Hülsenelement als damit einstückig verbundener Hülsenabschnitt an einer einstückigen Trägerhülse ausgebildet sind.

Gemäß der Erfindung wird eine einstückige, integrierte Trägerhülse zur Verfügung gestellt, die einen Federabschnitt aufweist, der die Funktion des im Stand der Technik separaten Federelements übernehmen kann, und einen Hülsenabschnitt, der die Funktion des im Stand der Technik ebenfalls separaten Hülsenelements hat.

Dank der Erfindung ist anstelle der beiden im Stand der Technik einzeln gefertigten und montierten Bauteile lediglich eine einzige Trägerhülse erforderlich, wodurch der Herstellungs-, Handhabungs- und Montageaufwand in vorteilhafter Weise reduziert wird.

Darüber hinaus besteht ein weiterer wesentlicher Vorteil darin, dass in der erfindungsgemä-ßen Trägerhülse durch die unlösbare einstückige Verbindung die relative Positionierung und Orientierung zwischen Feder- und Hülsenelement anders als im Stand der Technik bereits vorab eindeutig definiert ist, und insbesondere auch Toleranzen und Fehlstellungen relativ zum Lageraußenring verringert werden können. Somit ergeben sich positive Synergieeffekte sowohl bei der Herstellung als auch im Betrieb einer Hilfskraftlenkung.

Der Federabschnitt ist an der Trägerhülse bevorzugt derart ausgebildet und angeordnet, dass er sich im montierten Zustand axial zwischen einer äußeren, axial vom Getrieberad abgewandten Stirnseite des Außenlagerrings und einer dieser axial gegenüberliegenden Widerlagerfläche am Gehäuse angeordnet ist.

Der Hülsenabschnitt erstreckt sich bevorzugt axial von dem Federabschnitt, und ist so ausgestaltet und bemessen, dass die Trägerhülse axial von außen auf den Lageraußenring so weit aufgesteckt werden kann, bis der Federabschnitt axial stirnseitig anliegt. Anders ausgedrückt ist die Trägerhülse in etwa topfförmig ausgestaltet, wobei der Hülsenabschnitt die Topfwandung darstellt, und der Federabschnitt am Topfboden angeordnet ist. Zur Montage ist es lediglich erforderlich, den Lageraußenring bis zum stirnseitigen axialen Anschlag innen am Topfboden in diese topfartige Struktur einzusetzen. Bereits dadurch kann eine eindeutige relative Positionierung von Hülsenelement, Federelement und Lageranordnung erfolgen, die im Stand der Technik nicht oder nur mit zusätzlicher Justierung erreichbar ist.

Bevorzugt kann vorgesehen sein, dass der Federabschnitt von dem Hülsenabschnitt radial nach innen vorsteht. Der Hülsenabschnitt hat eine axiale Durchgangsöffnung, in welcher der Lageraußenring aufnehmbar ist. Der Federabschnitt kann an dem vom Lageraußenring abgewandten Ende des Hülsenabschnitts angeordnet sein und nach innen in die Durchgangsöffnung vorspringen. Dabei kann der Federabschnitt die Grundform einer koaxial zur Spindelachse angeordneten Ringscheibe haben, die axial zwischen Lageraußenring und Gehäuse angeordnet ist.

In einer vorteilhaften Ausführung kann vorgesehen sein, dass der Federabschnitt eine Wellfeder aufweist. Die Wellfeder kann als Druckfeder in an sich bekannter Weise als Wellscheibe ausgebildet sein, die axial vor- und zurückspringende, in Umfangsrichtung abwechselnd aufeinander folgend angeordnete Wellen, d.h. wellenförmige Ausformungen hat. Eine derartige Wellfeder ist einfach herstellbar und ermöglicht eine ausreichend hohe, definierte axiale Federkraft bei kleinen Abmessungen.

Eine weitere Möglichkeit ist, dass der Federabschnitt eine Tellerfeder aufweist. Eine als Tellerfeder ausgebildete axiale Druckfeder wird gebildet durch eine im wesentlichen konusmantelförmige Ringscheibe, die axial in Richtung auf eine flache Form elastisch zusammenpressbar ist. Eine Tellerfeder kann bevorzugt so angeordnet sein, dass sie vom Hülsenabschnitt aus gesehen konisch zusammenläuft, so dass sie in ihrem äußeren radialen Randbereich, wo sie mit dem Hülsenabschnitt verbunden ist, axial an dem Lageraußenring anliegt, und in ihrem radial inneren Bereich mit ihrer vom Lageraußenring abgewandten Außenseite, axial gegen das Gehäuse abgestützt ist.

Vorzugsweise kann der Hülsenabschnitt rohrförmig ausgebildet sein. Dazu kann der Hülsenabschnitt einen bevorzugt hohlzylindrischen Rohrabschnitt aufweisen, der einen auf den Außendurchmesser des Lageraußenrings abgestimmte Innendurchmesser hat, so dass der Lageraußenring darin spielarm oder möglichst spielfrei gehalten werden kann. Die axiale Breite kann an die Breite des Lageraußenrings angepasst sein, um diesen ganz oder teilweise zu umgreifen.

Es ist möglich, dass der Hülsenabschnitt radial von außen elastisch auf dem Lageraußenring verspannt ist. Dies kann dadurch erreicht werden, dass der Hülsenabschnitt mindestens ein oder mehrere in radialer Richtung wirksame Federelemente hat, oder selbst als radial aufweitbares Federelement ausgestaltet ist oder ein solches umfasst. Beim Einsetzen des Lageraußenrings werden der Hülsenabschnitt bzw. das oder die Federelemente radial aufgespreizt, so dass der Lageraußenring elastisch eingeklemmt und gehalten wird. Ein Vorteil ist eine vereinfachte Montage, indem die Trägerhülse einfach durch axiales Aufstecken des Hülsenabschnitts auf dem Lageraußenring fixiert wird, wobei sich der Federabschnitt in Position befindet und das Lager samt Trägerhülse in das Gehäuse eingesetzt werden kann.

Eine vorteilhafte Weiterbildung kann sein, dass der Hülsenabschnitt in Umfangsrichtung segmentiert ist. Die Segmentierung kann erzeugt werden durch axiale Einschnitte in dem Ende, welches von dem Federabschnitt weg gerichtet ist. Dadurch werden in axialer Richtung erstreckte Segmente gebildet, die an einem Ende an dem Federabschnitt fixiert sind, und deren anderes, freies Ende radial elastisch auslenkbar ist. Mit anderen Worten bilden diese Segmente in radialer Richtung elastische Federzungen, zwischen denen der Lageraußenring eingeklemmt sein kann. Derartige Federzungen können mit geringem Aufwand gefertigt werden und auf den Lageraußenring abgestimmt werden und ermöglichen eine einfache Montage.

Es kann weiterhin vorgesehen sein, dass der Hülsenabschnitt Befestigungsmittel aufweist zur axialen Fixierung auf dem Außenlagerring. Die Befestigungsmittel können beispielsweise radial innen angeordnet ausgebildet sein, beispielsweise innen an den vorangehend beschriebenen, an dem Lageraußenring festklemmbaren Segmenten oder Federelementen. Es können den Kraftschluss verbessernde Mittel vorgesehen sein, beispielsweise eine Oberflächenstrukturierung oder Aufrauhung, und alternativ oder zusätzlich eine reibungserhöhende Beschichtung oder dergleichen. Zusätzlich oder alternativ können den Lageraußenring haltende Formschlusselemente vorgesehen sein, beispielsweise den Lageraußenring umgreifende Rastelemente. Beispielsweise können die oben beschriebenen Federzungen elastische Rastarme mit nach innen gerichteten Rastvorsprüngen oder dergleichen umfassen.

Es kann vorgesehen sein, dass die Trägerhülse aus einem metallischen Werkstoff ausgebildet ist. Beispielsweise kann die Trägerhülse samt Feder-und Hülsenabschnitt rationell mittels Stanzen, Pressen, Biegen und dergleichen als plastisch umgeformtes einstückiges Blechformteil bereitgestellt werden, beispielsweise aus Stahl- oder Federstahlblech.

Es ist ebenfalls möglich, dass die Trägerhülse aus Kunststoff ausgebildet ist. Dadurch wird eine rationelle Fertigung als einstückiges Kunststoff-Formteil ermöglicht, bevorzugt im Kunststoff-Spritzguss aus einem Thermoplast. Vorteilhaft ist dabei die hohe Designfreiheit, die durch Form und Material in weiten Grenzen vorgebbaren elastischen Eigenschaften, und ein vorteilhaftes Gleitverhalten zusammen mit dem metallischen Lageraußenring und dem ebenfalls metallischen Gehäuse, wodurch ein geräusch- und verschleißsarmer Betrieb gewährleistet ist. Eine hohe Belastbarkeit und Langlebigkeit kann durch Einsatz eines faserverstärkten Kunststoffes realnisiert werden, beispielsweise durch einen fasergefüllten thermoplastischen Kunststoff.

Es kann vorgesehen sein, dass ein Wälzlager der Lageranordnung den Lageraußenring aufweist. Der Lageraußenring bildet dabei den Außenring eines Radial- oder Schrägwälzlagers, beispielsweise eines Kugellagers, und hat entsprechend eine Wälzkörperlaufbahn. Zwischen dieser und einer gegenüberliegenden inneren Wälzkörperlaufbahn an einem an dem Getrieberad angeordneten inneren oder Innenlagerring sind abrollbare Wälzkörper angeordnet.

Das Getrieberad kann in der Lageranordnung axial zwischen zwei Lagern angeordnet sein. Bevorzugt weist die Lageranordnung zwei Lager auf, zwischen denen das Getrieberad durch die von dem oder den Federelementen ausgeübte elastische Vorspannkraft axial elastisch verspannt ist. Dadurch werden axiale Ausgleichbewegungen und Verkippungen ermöglicht, wodurch Spiel durch Bauteiltoleranzen und Temperaturschwankungen kompensiert werden kann.

Sind die beiden Lager als Schrägkugellager ausgebildet, bei denen eine Verbindungslinie zwischen den Abrollpunkten der Kugeln schräg zur Spindelachse steht, kann durch eine spiegelsymmetrische Anordnung der beiden Lager eine X-Konfiguration erzeugt werden, bei der die Verbindungslinien die Spindelachse zwischen den Lagern schneiden, oder eine O-Konfiguration, bei der die Schnittpunkte außerhalb der Lageranordnung liegen. Beide Bauformen können durch die erfindungsgemäße Trägerhülse hinsichtlich Fertigungsaufwand und Betrieb optimiert werden.

Bevorzugt kann vorgesehen sein, dass die Lageranordnung zwei erfindungsgemäße Trägerhülsen umfasst, die jeweils auf einem Lageraußenring angeordnet sind. Daraus ergibt sich eine bezüglich einer Querebene spiegelsymmetrische Anordnung gebildet, in der die Hülsenabschnitte axial aufeinander zu weisen, während die Federabschnitte axial beidseitig von dem Getrieberad abgewandt sind.

Alternativ zur vorangehenden Anordnung mit zwei Trägerhülsen ist es möglich, lediglich eine Trägerhülse einzusetzen, die nur auf einer Seite auf einem Lageraußenring angebracht ist. Dadurch kann der Aufwand verringert werden, falls ein geringerer Ausgleich erforderlich ist.

Bevorzugt ist die Gewindespindel mit einer Zahnstange eines Zahnstangen-Lenkgetriebes verbunden.

Bevorzugt bilden die Gewindespindel und die Spindelmutter einen Kugelgewindetrieb.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht eines erfindungsgemäßen Lenksystems,
- Figur 2: eine schematisch freigestellte perspektivische Teilansicht des Spindeltriebs des Lenksystems gemäß Figur 1,
- Figur 3: einen Längsschnitt entlang der Spindelachse durch den Spindeltrieb gemäß Figur 2,
- Figur 4: eine schematisch in axialer Richtung auseinander gezogene Darstellung der Lageranordnung des Spindeltriebs gemäß Figur 2 und 3,
- Figur 5: eine perspektivische Ansicht einer erfindungsgemäßen Trägerhülse,
- Figur 6: eine schematisch auseinander gezogene Darstellung der Lageranordnung in einer zweiten Ausführung,
- Figur 7: einen Längsschnitt durch die Lageranordnung gemäß Figur 6,
- Figur 8: eine vergrößerte Detaildarstellung aus Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

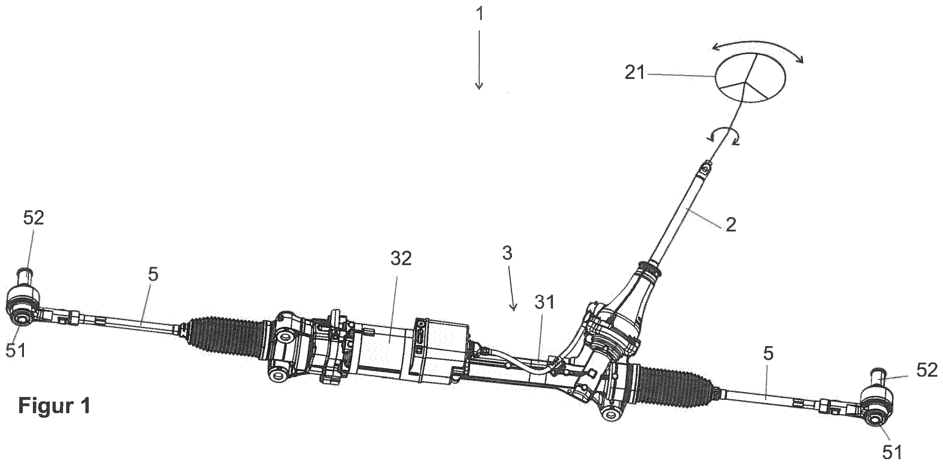

Figur 1 zeigt in einer schematischen Ansicht eine Hilfskraftlenkung 1 eines Kraftfahrzeug-Lenksystems. Diese umfasst eine Lenkwelle 2 auf, die an ihrem hinteren, der Fahrerposition in Fahrzeuginnenraum zugewandten Ende, gegebenenfalls über eine nicht dargestellte Zwischenwelle mit einem Lenkrad 21 verbunden ist, und zur Einbringung eines manuellen Lenkbefehls gedreht werden kann, wie mit dem Pfeil angedeutet.

Das vordere Ende der Lenkwelle 2 ist in einem Gehäuse 31 eines Lenkgetriebes 3 drehbar gelagert.

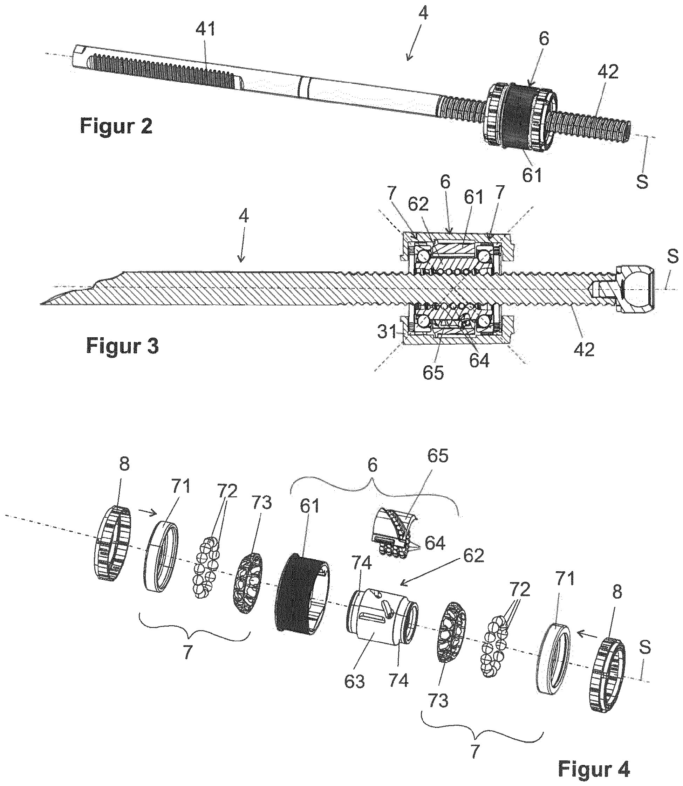

In dem Gehäuse 31 ist eine sich in Richtung einer Spindelachse S erstreckende Zahnstange 4, die in Figur 2 separat dargestellt ist, in ihrer Längsrichtung, d.h. in Richtung besagter Spindelachse S, verschiebbar gelagert, wie in Figur 1 mit einem Doppelpfeil angedeutet.

Die Zahnstange 4 weist eine Verzahnung 41 und ein Gewinde 42 auf. Ein vorne an der Lenkwelle 2 angebrachtes, innerhalb des Gehäuses 31 verdeckt angeordnetes Lenkritzel ist mit der Verzahnung 41 in Eingriff, so dass eine Drehung der Lenkwelle 2 umgesetzt wird in eine lineare Bewegung der Zahnstange 4 in dem Gehäuse 31. An ihren beiden Enden ist die Zahnstange 4 zur Übertragung der Lenkkraft über Spurstangen 5 und Gelenkköpfe 51 mit den Achsschenkeln 52 der hier nicht dargestellten gelenkten Räder verbunden.

Ein Hilfskraftantrieb weist einen an dem Gehäuse 31 angebrachten elektrischen Motor 32 auf, von dem ein Getrieberad 6 um die Spindelachse S drehend antreibbar ist. Zu diesem Zweck weist das Getrieberad 6 einen außen koaxial zur Spindelachse S umlaufenden Zahnkranz 61 mit einer Verzahnung auf, welche mit einem Antriebsritzel des Motors 32 kämmt.

Die Nabe des Getrieberads 6 weist eine auf das Gewinde 42 der Zahnstange 4 aufgeschraubte Spindelmutter 62 auf, die fest mit dem Zahnkranz 61 verbunden ist. Die Spindelmutter 62 ist im gezeigten Beispiel als Kugelmutter oder Kugelumlaufmutter ausgebildet, mit einem Gewindekörper 63 mit helikalen Umlaufkanälen, zwischen denen und den Gängen des Gewindes 42 Kugeln 64 geführt umlaufen, die außen über einen Umlenkkörper 65 zurückgeführt werden, der in der Explosionsdarstellung von Figur 4 radial nach außen abgehoben dargestellt ist.

Das Getrieberad 6 ist in einer Lageranordnung zwischen zwei spiegelsymmetrisch angeordneten Wälzlagern 7 um die Spindelachse S drehbar gelagert, und dabei axial, in Richtung der Spindelachse S, gegen das Gehäuse 31 abgestützt.

Jedes der Wälzlager 7 weist einen Lageraußenring 71 auf, in dem innen Kugeln 72 abwälzbar sind, die in einem Kugelkäfig 73 drehbar gehalten sind. Der fest mit dem Getrieberad 6 verbundene Lagerinnenring wird gebildet durch an dem Gewindekörper 63 der Spindelmutter 62 angeordneten Kugellaufbahnen 74, auf denen die Kugeln 72 abwälzen können. Die Kugellaufbahnen 74 können bevorzugt einstückig an dem Gewindekörper 63 ausgebildet sein.

Das Gewinde 42 bildet die Gewindestange eines Kugelgewindetriebs, welche durch einen drehenden Antrieb mittels des Motors 32 linear axial in Richtung der Spindelachse verlagert werden kann. Dadurch kann eine das manuell über die Lenkwelle 2 eingebrachte Lenkmoment unterstützende Hilfskraft auf die Zahnstange 4 ausgeübt werden.

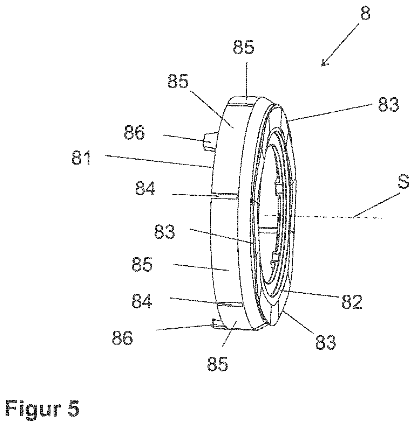

Außen auf den Lageraußenring 71 ist jeweils eine erfindungsgemäße, in Figur 5 separat dargestellte, Trägerhülse 8 in axialer Richtung aufgesteckt, wie in Figur 4 mit den Pfeilen angedeutet ist.

Die in Figur 3 gestrichelt eingezeichneten Verbindungslinien zwischen den Berührpunkten der Kugeln 72 mit den Kugellaufbahnen 74 und dem Lageraußenring 71 schneiden die Spindelachse zwischen den beiden Wälzlagern 7, so dass eine X-Konfiguration gebildet wird.

Die Trägerhülse 8 weist einen rohrförmigen Hülsenabschnitt 81 auf, der im Wesentlichen hohlzylindrisch ausgebildet ist. Der Hülsenabschnitt 81 ist einstückig verbunden mit einem stirnseitigen Federabschnitt 82. In der Ausführung von Figuren 3, 4 und 5 ist dieser als Wellfeder ausgebildet in Form einer in den Durchgang des Hülsenabschnitts 81 radial nach innen vorstehenden Ringscheibe, welche über ihren Umfang verteilte, axial in Richtung der Spindelachse S vor und zurück geschwungene Wellen 83 aufweist. Dadurch ist die Trägerhülse in etwa topfförmig ausgebildet, wobei die Wellfeder den Boden bildet.

Im eingebauten Zustand befindet sich der gewellte Federabschnitt 82 unter Vorspannung axial zwischen der äußeren Stirnseite des Lageraußenrings 71 und einem bevorzugt ringförmigen Widerlager innen in dem Gehäuse 31.

Durch eine Mehrzahl von über den Umfang verteilten, von der dem Federabschnitt 82 abgewandten Seite eingebrachten axialen Einschnitten 84 werden in radialer Richtung elastische Federzungen 85 ausgebildet. Diese sind radial so beabstandet, dass sie beim Aufstecken durch den Lageraußenring 71 leicht elastisch radial nach außen aufgespreizt werden, und dadurch den Lageraußenring 71 federnd klemmen. Die Trägerhülse 8 kann zur Montage einfach axial aufgesteckt werden, wobei der Außenlagerring 71 so weit in den Hülsenabschnitt 81 eintaucht, bis er von innen an dem Federelement 72 anliegt. Dabei wird er von den Federzungen 85 elastisch eingeklemmt und kraftschlüssig gehalten.

Es können axial von den Federzungen 85 an dem vom Federabschnitt 82 abgewandten Ende Befestigungsmittel 86 vorgesehen sein, beispielsweise mit nach innen vorstehenden Haltevorsprüngen, die den Lageraußenring 71 umgreifen können, oder zwischen denen der Lageraußenring 71 formschlüssig eingeschnappt werden kann.

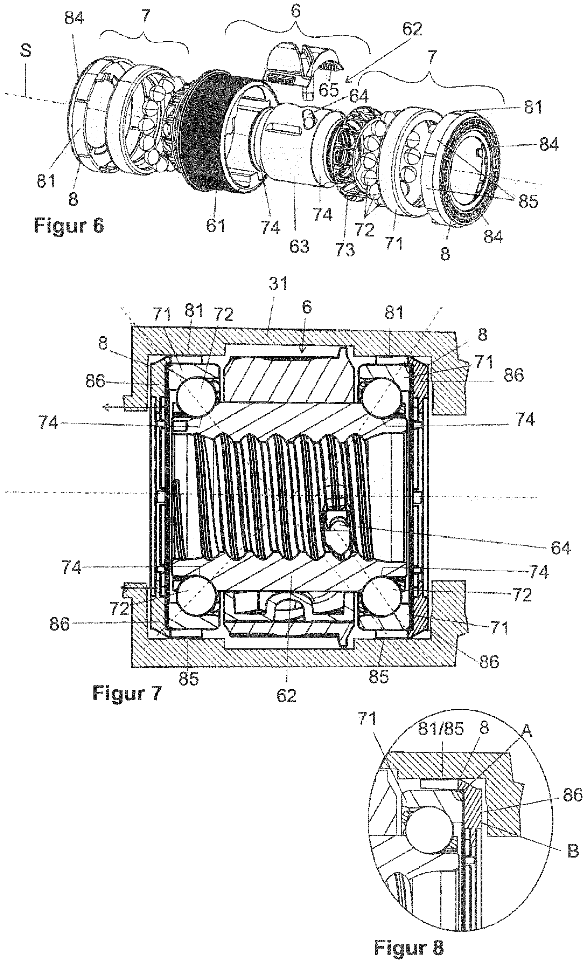

In den Figuren 6, 7 und 8 ist eine Lageranordnung mit Lagern 7 gezeigt, mit einer erfindungsgemäßen Trägerhülse 8 in einer zweiten Ausführung. Die übrigen Bestandteile sind, soweit funktional gleichwirkend, mit denselben Bezugszeichen versehen.

Die Trägerhülse 8 weist ebenfalls einen gleichartig ausgebildeten Hülsenabschnitt 81 zur Fixierung auf dem Außenumfang des Lageraußenrings 71 auf.

Anstelle der Wellfeder mit dem gewellten Federabschnitt 82 ist nun ein radial nach innen vorstehender, von dem Hülsenabschnitt 81 axial nach außen konusmantelförmig zusammenlaufender Ringabschnitt 86 vorgesehen. Dieser liegt an seinem radial außenliegenden Anlagebereich A stirnseitig gegen den Lageraußenring 71 an, und mit seinem radial innen liegenden, axial nach außen abgewandten Anlagebereich B gegen das Gehäuse 31, wie in der vergrößerten Detailansicht von Figur 8 erkennbar ist. Dadurch wirkt der Ringabschnitt 86 als konusmantelförmige Tellerfeder, durch welche eine axiale elastische Vorspannkraft auf die Lager 7 und das dazwischen angeordnete Getrieberad 6 ausgeübt werden kann.

Die Trägerhülse 8 kann als einstückiges Formteil ausgebildet sein, beispielsweise durch Spritzgießen aus einem thermoplastischen Kunststoff, der faserverstärkt sein kann. Alternativ ist eine Fertigung als Blechformteil, beispielsweise durch Kaltumformung aus Stahl- oder Federstahlblech denkbar und möglich.

### Bezugszeichenliste

- 1: Hilfskraftlenkung
- 2: Lenkwelle
- 21: Lenkrad
- 3: Lenkgetriebe
- 31: Gehäuse
- 32: Motor
- 4: Zahnstange
- 41: Verzahnung
- 42: Gewinde
- 5: Spurstange
- 51: Gelenkkopf
- 52: Achsschenkel
- 6: Getrieberad
- 61: Zahnkranz
- 62: Spindelmutter
- 63: Gewindekörper
- 64: Kugeln
- 65: Umlenkkörper
- 7: Lager (Wälzlager)
- 71: Lageraußenring
- 72: Kugeln
- 73: Kugelkäfig
- 74: Kugellaufbahn
- 8: Trägerhülse
- 81: Hülsenabschnitt
- 82: Federabschnitt
- 83: Welle
- 84: Einschnitt
- 85: Federzunge
- 86: Ringabschnitt
- S: Spindelachse
- A, B: Anlagebereiche

## Patentansprüche

1. Hilfskraftlenkung (1) für ein Kraftfahrzeug, umfassend eine in eine Spindelmutter (62) eingreifende, axial in Richtung einer Spindelachse (S) erstreckte, in einem Gehäuse (31) axial verlagerbare Gewindespindel (42), und eine Antriebseinheit mit einem drehfest mit der Spindelmutter (62) verbundenen, um die Spindelachse (S) drehend antreibbaren Getrieberad (6), welches in dem Gehäuse (31) in einer Lageranordnung (7) drehbar gelagert ist, die mindestens einen Lageraußenring (71) aufweist, der stirnseitig über ein Federelement (82, 86) an dem Gehäuse (31) axial abgestützt ist und der koaxial in einem Hülsenelement (81) aufgenommen und radial in dem Gehäuse (31) gehalten ist,
**dadurch gekennzeichnet,**
**dass** das Federelement als Federabschnitt (82, 86) und das Hülsenelement als damit einstückig verbundener Hülsenabschnitt (81) an einer einstückigen Trägerhülse (8) ausgebildet sind.

2. Hilfskraftlenkung nach Anspruch 1, **dadurch gekennzeichnet, dass** der Federabschnitt (82, 86) von dem Hülsenabschnitt (81) radial nach innen vorsteht.

3. Hilfskraftlenkung nach einem der vorangehenden Ansprüche, **dadurch gekennzeichnet, dass** der Federabschnitt (82) eine Wellfeder aufweist.

4. Hilfskraftlenkung nach einem der vorangehenden Ansprüche, **dadurch gekennzeichnet, dass** der Federabschnitt (86) eine Tellerfeder aufweist.

5. Hilfskraftlenkung nach einem der vorangehenden Ansprüche, **dadurch gekennzeichnet, dass** der Hülsenabschnitt (81) rohrförmig ausgebildet ist.

6. Hilfskraftlenkung nach einem der vorangehenden Ansprüche, **dadurch gekennzeichnet, dass** der Hülsenabschnitt (81) radial von außen elastisch auf dem Lageraußenring (71) verspannt ist.

7. Hilfskraftlenkung nach einem der vorangehenden Ansprüche, **dadurch gekennzeichnet, dass** der Hülsenabschnitt (81) in Umfangsrichtung segmentiert ist.

8. Hilfskraftlenkung nach einem der vorangehenden Ansprüche, **dadurch gekennzeichnet, dass** der Hülsenabschnitt (81) Befestigungsmittel (85) aufweist zur axialen Fixierung auf dem Außenlagerring (71).

9. Hilfskraftlenkung nach einem der vorangehenden Ansprüche, **dadurch gekennzeichnet, dass** die Trägerhülse (8) aus einem metallischen Werkstoff ausgebildet ist.

10. Hilfskraftlenkung nach einem der Ansprüche 1 bis 8, **dadurch gekennzeichnet, dass** die Trägerhülse (8) aus Kunststoff ausgebildet ist.

11. Hilfskraftlenkung nach einem der vorangehenden Ansprüche, **dadurch gekennzeichnet, dass** ein Wälzlager (7) der Lageranordnung den Lageraußenring (71) aufweist.

12. Hilfskraftlenkung nach einem der vorangehenden Ansprüche, **dadurch gekennzeichnet, dass** das Getrieberad (6) in der Lageranordnung axial zwischen zwei Lagern (7) angeordnet ist.

13. Hilfskraftlenkung nach einem der vorangehenden Ansprüche, **dadurch gekennzeichnet, dass** die Gewindespindel (42) mit einer Zahnstange (4) eines Zahnstangen-Lenkgetriebes verbunden ist.

14. Hilfskraftlenkung nach einem der vorangehenden Ansprüche, **dadurch gekennzeichnet, dass** die Gewindespindel (42) und die Spindelmutter (62) einen Kugelgewindetrieb bilden.

## Claims

1. Power-assisted steering system (1) for a motor vehicle, comprising a threaded spindle (42) which engages in a spindle nut (62), extends axially in the direction of a spindle axis (S) and is axially displaceable in a housing (31), and a drive unit with a gear wheel (6) which is non-rotatably connected to the spindle nut (62) and can be driven in rotation about the spindle axis (S), which is rotatably mounted in the housing (31) in a bearing arrangement (7) which has at least one bearing outer ring (71) which is axially supported at the end face on the housing (31) via a spring element (82, 86) and which is received coaxially in a sleeve element (81) and held radially in the housing (31),
**characterised in**
**in that** the spring element is designed as a spring section (82, 86) and the sleeve element is designed as a sleeve section (81) connected integrally thereto on an integral carrier sleeve (8).

2. Power-assisted steering according to claim 1, **characterised in that** the spring section (82, 86) projects radially inwards from the sleeve section (81).

3. Power-assisted steering system according to one of the preceding claims, **characterised in that** the spring section (82) has a wave spring.

4. Power-assisted steering system according to one of the preceding claims, **characterised in that** the spring section (86) has a disc spring.

5. Power-assisted steering system according to one of the preceding claims, **characterised in that** the sleeve section (81) is tubular.

6. Power-assisted steering system according to one of the preceding claims, **characterised in that** the sleeve section (81) is elastically braced radially from the outside on the bearing outer ring (71).

7. Power-assisted steering system according to one of the preceding claims, **characterised in that** the sleeve section (81) is segmented in the circumferential direction.

8. Power-assisted steering system according to one of the preceding claims, **characterised in that** the sleeve section (81) has fastening means (85) for axial fixing on the outer bearing ring (71).

9. Power-assisted steering system according to one of the preceding claims, **characterised in that** the support sleeve (8) is made of a metallic material.

10. Power-assisted steering system according to one of the claims 1 to 8, **characterised in that** the carrier sleeve (8) is made of plastic.

11. Power-assisted steering system according to one of the preceding claims, **characterised in that** a rolling bearing (7) of the bearing arrangement has the bearing outer ring (71).

12. Power-assisted steering system according to one of the preceding claims, **characterised in that** the gear wheel (6) is arranged axially between two bearings (7) in the bearing arrangement.

13. Power-assisted steering system according to one of the preceding claims, **characterised in that** the threaded spindle (42) is connected to a rack (4) of a rack-and-pinion steering gear.

14. Power-assisted steering system according to one of the preceding claims, **characterised in that** the threaded spindle (42) and the spindle nut (62) form a ball screw drive.

## Revendications

1. Système de direction assistée (1) pour un véhicule automobile, comprenant une broche filetée (42) qui s'engage dans un écrou de broche (62), s'étend axialement en direction d'un axe de broche (S) et est axialement déplaçable dans un boîtier (31), et une unité d'entraînement avec une roue dentée (6) qui est reliée de manière non rotative à l'écrou de broche (62) et peut être entraînée en rotation autour de l'axe de broche (S), qui est monté rotatif dans le boîtier (31) dans un palier (7) comportant au moins une bague extérieure de roulement (71) qui est supportée axialement sur la face frontale du boîtier (31) par l'intermédiaire d'un élément de ressort (82, 86) et qui est reçue coaxialement dans un élément de manchon (81) et maintenue radialement dans le boîtier (31),
**caractérisé en**
en ce que l'élément de ressort est conçu comme une section de ressort (82, 86) et l'élément de manchon est conçu comme une section de manchon (81) reliée d'un seul tenant à une douille porteuse intégrale (8).

2. Système de direction assistée selon la revendication 1, **caractérisée par le fait que** la section de ressort (82, 86) fait saillie radialement vers l'intérieur de la section de manchon (81).

3. Système de direction assistée selon l'une des revendications précédentes, **caractérisé par le fait que** la section de ressort (82) est un ressort ondulé.

4. Système de direction assistée selon l'une des revendications précédentes, **caractérisé par le fait que** la section de ressort (86) comporte un ressort à disque.

5. Système de direction assistée selon l'une des revendications précédentes, **caractérisé par le fait que** la section du manchon (81) est tubulaire.

6. Système de direction assistée selon l'une des revendications précédentes, **caractérisé en ce que** la section de manchon (81) est élastiquement soutenue radialement de l'extérieur sur la bague extérieure de roulement (71).

7. Système de direction assistée selon l'une des revendications précédentes, **caractérisé par le fait que** la section du manchon (81) est segmentée dans la direction circonférentielle.

8. Système de direction assistée selon l'une des revendications précédentes, **caractérisé en ce que** la section de manchon (81) comporte des moyens de fixation (85) pour la fixation axiale sur la bague de roulement extérieure (71).

9. Système de direction assistée selon l'une des revendications précédentes, **caractérisé par le fait que** le manchon de support (8) est en matériau métallique.

10. Système de direction assistée selon l'une des revendications 1 à 8, **caractérisé par le fait que** la douille porteuse (8) est en plastique.

11. Système de direction assistée selon l'une des revendications précédentes, **caractérisé en ce qu'**un palier à roulement (7) de l'arrangement de palier comporte la bague extérieure de palier (71).

12. Système de direction assistée selon l'une des revendications précédentes, **caractérisé par le fait que** la roue dentée (6) est disposée axialement entre deux paliers (7) dans le montage de paliers.

13. Système de direction assistée selon l'une des revendications précédentes, **caractérisé en ce que** la tige filetée (42) est reliée à une crémaillère (4) d'un boîtier de direction à crémaillère.

14. Système de direction assistée selon l'une des revendications précédentes, **caractérisé par le fait que** la tige filetée (42) et l'écrou de tige (62) forment un entraînement par vis à billes.
